# EUROPÄISCHE PATENTSCHRIFT

(11) **EP 2 163 792 B1**
(45) Veröffentlichungstag und Bekanntmachung des Hinweises auf die Patenterteilung: **31.10.2012**
(21) Anmeldenummer: 08164399.1
(22) Anmeldetag: 16.09.2008
(51) Int. Cl.: F16H 61/32, F16H 61/28

(54) **Aktuatorvorrichtung für ein Getriebe eines Kraftfahrzeuges**
Actuator device for a transmission of a motor vehicle
Dispositif d'actionneur pour une transmission d'un véhicule automobile

(43) Veröffentlichungstag der Anmeldung: 17.03.2010
(73) Patentinhaber: Valeo Sicherheitssysteme GmbH, 85253 Erdweg (DE)
(72) Erfinder: Orth, Dietmar, D 85253 Erdweg (DE); Drescher, Christian, D 85253 Erdweg (DE)
(74) Vertreter: Croonenbroek, Thomas Jakob

(56) Entgegenhaltungen:
- EP-A- 0 636 819
- EP-A- 1 852 636
- WO-A-2005/057051
- DE-B- 1 130 711
- US-A- 2 641 637
- US-A- 6 065 363
- US-B1- 6 334 371

## Beschreibung

Die Erfindung bezieht sich auf eine Aktuatorvorrichtung für ein Getriebe eines Kraftfahrzeuges.

Automatisierte Getriebe (z. B. "AMT" Getriebe für "Automated Manual Transmission Control") erfreuen sich immer größerer Beliebtheit. Wohingegen in früheren Jahren rein mechanische Schaltgetriebe in Fahrzeugen benutzt wurden, sind nun mit AMT Schaltgetrieben oder DCT Schaltgetrieben (für "Double Clutch Transmission") so große Fortschritte gemacht worden, dass diese Getriebe nun dazu beitragen den Kraftstoffverbrauch eines Fahrzeugs zu reduzieren und zu optimieren.

Der Schaltvorgang eines AMT Schaltgetriebes ist vergleichbar mit dem eines manuell betätigten Getriebes. Jedoch weist das AMT Getriebe eine elektronisch gesteuerte Kupplung und Schaltgabeln auf, wobei die Kupplung und die Schaltgabeln über Aktuator- oder Stellvorrichtungen bewegt werden. Diese Aktuatorvorrichtungen werden durch ein Kontrollgerät gesteuert.

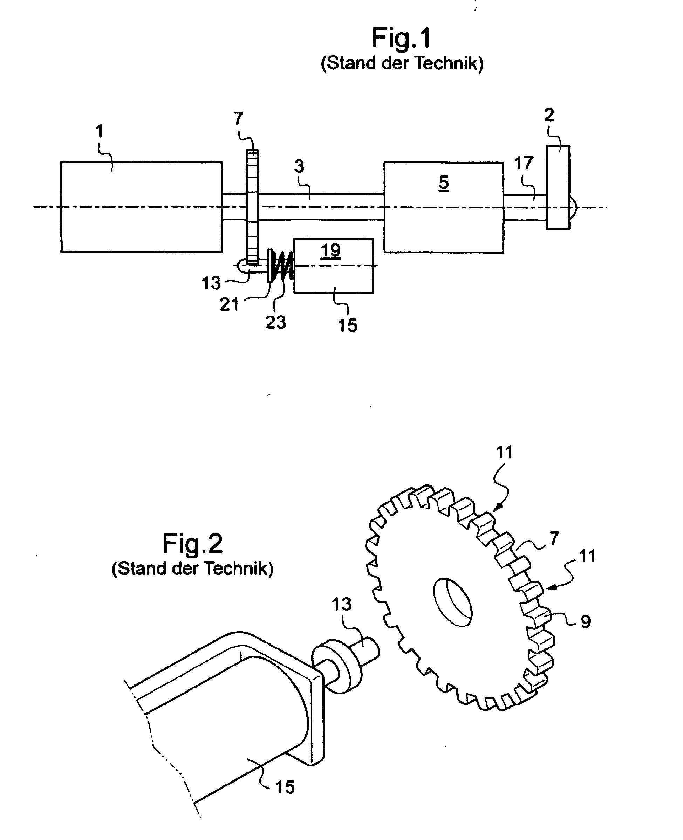

Die Figuren 1 und 2 zeigen einen schematischen Aufbau einer bekannten Aktuatorvorrichtung für ein Kraftfahrzeuggetriebe.

Eine Motoreinheit 1, z. B. ein Elektromotor, ist über eine Antriebswelle 3, ein Übersetzungsgetriebe 5 und eine Ausgangswelle 17 an einen Schaltfinger 2 gekoppelt.

Dieser Schaltfinger 2 dient dazu Schaltgabeln im Getriebe zu bewegen, um einen bestimmten Gang einzulegen.

Bei dem Getriebe handelt es sich z.B. um ein oben beschriebenes automatisiertes Schaltgetriebe AMT.

Auf der Antriebswelle 3 ist ein Rad 7 angebracht, z. B. ein Zahnrad (siehe Figur 2), welches an seinem Außenumfang, zwischen den Zähnen 9 Aufnahmen 11 definiert. In diese Aufnahmen 11 kann ein Blockierfinger 13 eingreifen, wobei der Blockierfinger ein freies Ende eines Ankers eines Solenoiden 15 ist.

Zwischen dem Gehäuse 19 des Solenoiden und einer vom Blockierfinger getragenen Schelle 21 ist eine Druckfeder 23 angebracht, die so ausgelegt ist, dass im unbestromten Zustand des Solenoiden 15 der Blockierfinger 13 in eine der Aufnahmen 11 des Zahnrads 7 eingreift und somit den die Welle 3 blockiert. Der Schaltfinger 2 wird somit in der seiner Stellung festgehalten.

Bei automatisierten Schaltgetrieben werden in der Regel mindestens zwei Aktuatorvorrichtungen innerhalb des Getriebes benutzt, um einen Schaltvorgang in die ungeraden (Gänge 1, 3 oder 5) bew. in die geraden Gänge (Gänge 2, 4, 6) zu gewährleisten.

Eine solche Aktuatorvorrichtung ist z.B in DE 1130711 beschrieben.

Nachteilig hat sich nun erwiesen, dass bei einem während eines Schaltvorganges auftretenden Störfalls, bei dem ein Aktuator 15 nicht mehr mit Strom versorgt werden, die Feder 23 den Blockierfinger 13 in die Aufnahme drückt und somit das Rad 7 und die Welle 3, und somit den gesamten Antriebsstrang bis zum Schaltfinger 2 blockiert.

Aufgabe der vorliegenden Erfindung ist es solche undefinierten Zustände zu vermeiden und zusätzliche Sicherheit im unbestromten Falle des Solenoiden zu gewährleisten.

Diese Aufgabe wird erfindungsgemäß gelöst durch eine Aktuatorvorrichtung für ein Getriebe eines Kraftfahrzeuges umfassend eine Motoreinheit und einen durch die Motoreinheit beweglichen und über einen Antriebsstrang verbundenen Schaltfinger, umfassend einen Aktuator und einen durch den Aktuator beweglichen Blockierfinger, der in ein mit dem Antriebsstrang verbundenes und entsprechende Aufnahmen versehenes Rad eingreifen kann, so dass der Antriebsstrang der Aktuatorvorrichtung blockiert ist, **dadurch gekennzeichnet, dass** der Aktuator nur zwei stabile Endstellungen einnehmen kann, wobei eine Endstellung eine Ruhestellung ist, in der der Antriebstrang nicht blockiert ist und eine Aktivstellung, in der der Blockierfinger in eine Aufnahme des Rades eingreift und somit den Antriebsstrang blockiert.

In einem Ausführungsbeispiel umfasst der Aktuator einen Solenoiden, dessen Anker den Blockierfinger trägt, wobei der Solenoid beispielsweise als bistabler Solenoid ausgeführt werden kann.

Alternativ kann die Aktuatorvorrichtung auch eine bistabile Federvorrichtung aufweisen, die an den Anker des Solenoiden angreift und so zwei stabile Endstellungen definiert, wobei alle zwischen den Endstellungen liegenden Zwischenstellungen instabil sind.

Dabei kann die Federvorrichtung eine Spiralfeder aufweisen mit zwei Enden, deren eines Ende festgelegt ist und deren anderes Ende mit dem Anker in Wirkverbindung steht.

Der Anker des Solenoiden kann über eine geführte Stange verlängert sein, an deren freies Ende ein Ende der Spiralfeder angebracht ist.

In einer weiteren Variante kann die Aktuatorvorrichtung eine zweiteilig bistabil ausgeführte, durch den Aktuator bewegbare Schwenkhebelvorrichtung aufweisen, wobei ein erster Schwenkhebel den Blockierfinger trägt. Der Aktuator kann in diesem Falle z. B. in Wirkverbindung mit dem ersten, den Blockierfinger tragenden Schwenkhebel stehen und wobei der erste Schwenkhebel mit einem Ende an einer feststehenden Achse angelenkt ist und wobei ein zweiter Schwenkhebel mit einem Ende schwenkbar mit dem ersten Schwenkhebel verbunden ist und das andere Ende des zweiten Schwenkhebels ein Langloch aufweist, und die Schwenkhebelvorrichtung kann eine Duckfeder aufweisen, deren eines Ende sich an der feststehenden, das Langloch durchgreifenden Achse abstützt und deren anderes Ende sich am Drehpunkt zwischen den beiden Schwenkhebeln abstützt.

Weitere erfindungsmäßige Merkmale und Vorteile ergeben sich aus den folgenden, anhand von Figuren erläuterten Ausführungsbeispielen. Es zeigen:
- Figur 1 zeigt eine Schema einer bekannten Aktuatorvorrichtung,
- Figur 2 zeigt in Perspektivansicht eines Details der Figur 1,
- Figur 3 zeigt ein Schema einer ersten erfindungsmäßigen Lösung, und
- Figur 4 zeigt ein Schema einer zweiten erfindungsmäßigen Lösung.

In allen Figuren werden die gleichen Teile mit gleichen Referenzen bezeichnet. Die Figuren 1 und 2 zeigen schematisch eine bekannte, in der Einleitung beschriebene Aktuatorvorrichtung.

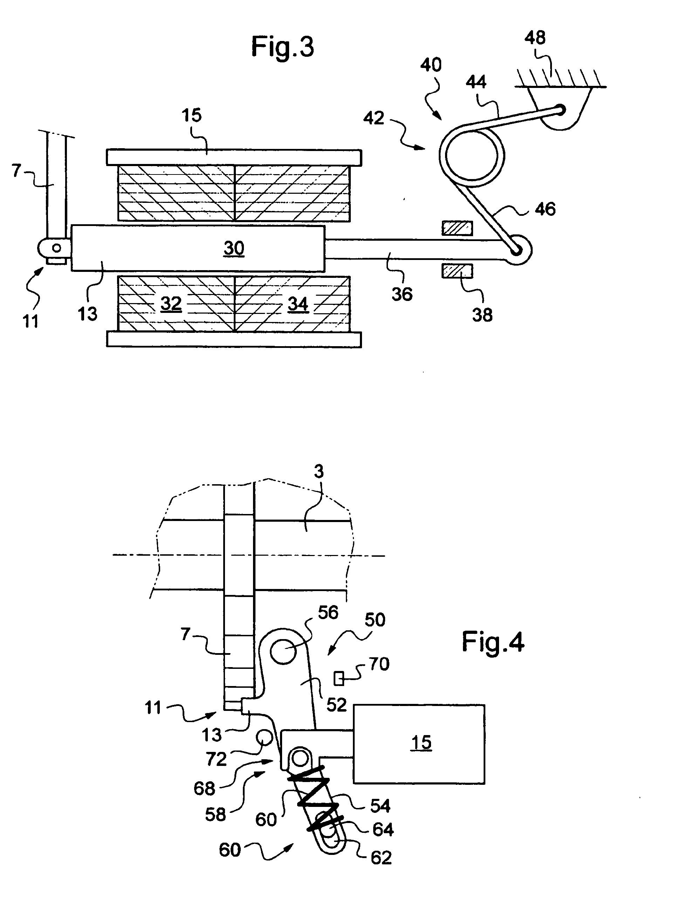

Die Figur 3 zeigt ein Schema einer ersten erfindungsmäßigen Lösung einer Aktuatorvorrichtung für ein Getriebe eines Kraftfahrzeuges. Diese Aktuatorvorrichtung für ein Getriebe eines Kraftfahrzeuges umfasst eine nicht offenbarte Motoreinheit (zum Beispiel ein Elektromotor) und einen durch die nicht offenbarte Motoreinheit beweglichen und über einen nicht offenbarten Antriebsstrang (Welle , Übersetzungsgetriebe , Abtriebswelle ) verbundenen nicht offenbarten Schaltfinger , der in das Getriebe eingreifen kann, um zum Beispiel die Schaltgabeln zu bewegen.

Weiterhin umfasst die Aktuatorvorrichtung einen Aktuator 15 und einen durch den Aktuator 15 beweglichen Blockierfinger 13.

Dieser Blockierfinger 13 kann in ein mit dem Antriebsstrang verbundenes und mit entsprechenden Aufnahmen 11 versehenes Rad 7 eingreifen.

In diesem Falle ist der Antriebsstrang des Kraftfahrzeugs blockiert.

In diesem Ausführungsbeispiel ist die Aktuatorvorrichtung so ausgeführt, dass der Aktuator 15 nur zwei stabile Endstellungen einnehmen kann. In der Figur 3 ist die Aktivstellung dargestellt, in der der Blockierfinger 13 in eine Aufnahme 11 des Rades eingreift und somit den Antriebsstrang blockiert. Die andere nicht dargestellte Endstellung ist eine Ruhestellung, in der der Antriebstrang nicht blockiert ist, bzw. in der der Blockierfinger nicht in die Aufnahme 11 des Zahnrades 7 eingreift.

Wie in Figur 3 gezeigt ist der Aktuator 15 als Solenoid ausgeführt, dessen Anker 30 von Elektromagneten 32, 34 zur Bewegung des Ankers 30 umgeben ist und der den Blockierfinger 13 trägt.

Der Anker ist mit einer Stange 36 fluchtend verbunden und von Führungsmitteln 38 geführt. Um die bistabilen Endpositionen zu definieren und zu erhalten, weist die Aktuatorvorrichtung eine bistabile Federvorrichtung 40 auf. Diese Federvorrichtung 40 umfasst zum Beispiel eine Spiralfeder 42 mit zwei freien Enden 44 und 46, deren eines Ende 44 festgelegt ist (zum Beispiel an einem Gehäuseteil 48) und deren anderes Ende 46 an dem freien Ende der Stange 36 angelenkt ist und somit mit dem Anker 30 in Wirkverbindung steht.

Man erkennt, dass die Feder so dimensioniert ist, dass nur zwei stabile Endstellungen definiert werden, wobei alle zwischen den Endstellungen liegenden Zwischenstellungen instabil sind. Damit ist ein Ziel erreicht, dass der Aktuator 15 immer nur eine definierte Stellung einnehmen kann. Es genügt den Solenoiden mit einem Stromimpuls zu versorgen, um die Federkraft der Feder 42 zu überwinden und so den Blockierfinger 13 von der Ruhe- in die Aktivstellung oder umgekehrt zu überführen. Störfälle, wie zum Beispiel ein Stromausfall, können nicht mehr zu undefinierten Zwischenstellungen führen und die Sicherheit ist somit erhöht und die Störanfälligkeit herabgesetzt.

In Figur 4 ist ein weiteres Ausführungsbeispiel dargestellt. In diesem Beispiel umfasst die Aktuatorvorrichtung eine zweiteilig, bistabil ausgeführte, durch den Aktuator 15 bewegbare Schwenkhebelvorrichtung 50.

Die Schwenkhebelvorrichtung 50 umfasst einen ersten Schwenkhebel 52 und einen zweiten Schwenkhebel 54. Der erste Schwenkhebel 52 ist an einer feststehenden Schwenkachse 56 angelenkt und trägt den Blockierfinger 13, der in die Aufnahmen 11 eingreifen kann. Dieser Schwenkhebel 52 steht auch in Wirkverbindung mit dem Aktuator 15 (z.B. als Solenoid ausgeführt), der diesen Schwenkhebel hin- und herbewegen kann.

Der zweite Schwenkhebel 54 ist mit einem Ende schwenkbar mit dem ersten Schwenkhebel 52 verbunden. Das andere Ende 60 des zweiten Schwenkhebels 54 weist ein Langloch 62 auf, in das eine feststehende Achse, z. B. ein Stift, 64 eingreift, so dass der zweite Hebel 54 nicht nur eine Schwenk-, sondern auch gleichzeitig eine Translationsbewegung ausführen kann.

Eine Druckfeder 66 stützt sich mit einem Ende an der feststehenden, das Langloch durchgreifenden Achse 64 ab und mit dem anderen Ende am Drehpunkt 68 zwischen den beiden Schwenkhebeln 52 und 54. Die Endstellungen werden erreicht, wenn der Schwenkhebel an dem einen 70 oder anderen 72 Anschlag anliegt.

Die Druckfeder 66 wirkt in der Weise, dass der Drehpunkt 68 sich immer so weit wie möglich vom Stift 64 entfernt, so dass der Aktuator 15 eine gewisse Kraft aufbringen muss, um die Federkraft, welche dann am meisten komprimiert ist, wenn beide Schwenkhebel fluchtend angeordnet sind, zu überwinden. Damit wird die Bistabilität, und somit die sichere Funktionsweise der Aktuatorvorrichtung gewährleistet.

In einem nicht dargestellten Ausführungsbeispiel wird als Aktuator 15 ein Solenoid verwendet, der an sich als bistabiler Solenoid ausgeführt ist (siehe z.B. DE4334031).

Es ist erkennbar, dass dadurch sicher eine Stellung der Aktuatorvorrichtung, auch im Störfalle gewährleistet werden kann.

## Patentansprüche

1. Aktuatorvorrichtung für ein Getriebe eines Kraftfahrzeuges umfassend eine Motoreinheit (1) und einen durch die Motoreinheit (1) beweglichen und über einen Antriebsstrang (3) verbundenen Schaltfinger (2), und einen Aktuator (15) mit einem durch den Aktuator beweglichen Blockierfinger (13), der in ein mit dem Antriebsstrang verbundenes und entsprechende Aufnahmen (11) versehenes Rad (7) eingreifen kann, so dass der Antriebsstrang der Aktuatorvorrichtung blockiert ist, **dadurch gekennzeichnet, dass** der Aktuator (15) auch im unbestromten Störfall bistabil nur zwei stabile Endstellungen einnehmen kann, wobei eine Endstellung eine Ruhestellung ist, in der der Antriebstrang nicht blockiert ist und eine Aktivstellung, in der der Blockierfinger (13) in eine Aufnahme des Rades (7) eingreift und somit den Antriebsstrang blockiert.

2. Aktuatorvorrichtung nach Anspruch 1, **dadurch gekennzeichnet, dass** der Aktuator (15) einen Solenoïd (30, 32, 34) umfasst, dessen Anker (30) den Blockierfinger trägt.

3. Aktuatorvorrichtung nach Anspruch 2, **dadurch gekennzeichnet, dass** der Solenoid als bistabler Solenoid ausgeführt ist.

4. Aktuatorvorrichtung nach Anspruch 2, **dadurch gekennzeichnet, dass** sie eine bistabile Federvorrichtung (40) aufweist, die an den Anker (30) des Solenoiden angreift und so zwei stabile Endstellungen definiert, wobei alle zwischen den Endstellungen liegenden Zwischenstellungen instabil sind.

5. Aktuatorvorrichtung nach Anspruch 4, **dadurch gekennzeichnet, dass** die Federvorrichtung (40) eine Spiralfeder aufweist mit zwei Enden (44, 46), deren eines Ende (44) festgelegt ist und deren anderes Ende (46) mit dem Anker (30) in Wirkverbindung steht.

6. Aktuatorvorrichtung nach Anspruch 5, **dadurch gekennzeichnet, dass** der Anker (30) über eine geführte Stange (36) verlängert ist, an deren freies Ende ein Ende der Spiralfeder (40) angebracht ist.

7. Aktuatorvorrichtung nach Anspruch 1, **dadurch gekennzeichnet, dass** sie eine zweiteilig bistabil ausgeführte, durch den Aktuator bewegbare Schwenkhebelvorrichtung (50) aufweist, wobei ein erster Schwenkhebel (52) den Blockierfinger (13) trägt.

8. Aktuatorvorrichtung nach Anspruch 7, **dadurch gekennzeichnet, dass** der Aktuator (15) in Wirkverbindung mit dem ersten, den Blockierfinger (13) tragenden Schwenkhebel (52) steht und wobei der erste Schwenkhebel (52) mit einem Ende an einer feststehenden Achse (56) angelenkt ist und wobei ein zweiter Schwenkhebel (54) mit einem Ende schwenkbar mit dem ersten Schwenkhebel (52) verbunden ist und das andere Ende des zweiten Schwenkhebels (54) ein Langloch (62) aufweist, und dadurch, dass die
Schwenkhebelvorrichtung (50) eine Druckfeder (66) aufweist, deren eines Ende sich an der feststehenden, das Langloch (62) durchgreifenden Achse (64) abstützt und deren anderes Ende sich am Drehpunkt (68) zwischen den beiden Schwenkhebeln (52,54) abstützt.

## Claims

1. Actuator device for a transmission of a motor vehicle, comprising an engine unit (1) and a shift finger (2) movable by means of the engine unit (1) and connected via a drive train (3), and an actuator (15) with a blocking finger (13) which is movable by means of the actuator and which can engage into a wheel (7) connected to the drive train and provided with corresponding receptacles (11), so that the drive train of the actuator device is blocked, **characterized in that** the actuator (15) can assume only two stable end positions in a bistable manner even in a currentless fault situation, an end position being a position of rest in which the drive train is not blocked, and an active position in which the blocking finger (13) engages into a receptacle of the wheel (7) and thus blocks the drive train.

2. Actuator device according to Claim 1, **characterized in that** the actuator (15) comprises a solenoid (30, 32, 34), the armature (30) of which carries the blocking finger.

3. Actuator device according to Claim 2, **characterized in that** the solenoid is designed as a bistable solenoid.

4. Actuator device according to Claim 2, **characterized in that** it has a bistable spring device (40) which acts on the armature (30) of the solenoid and thus defines two stable end positions, all the intermediate positions which lie between the end positions being unstable.

5. Actuator device according to Claim 4, **characterized in that** the spring device (40) has a coil spring with two ends (44, 46), one end (44) of which is fixed and the other end (46) of which is operatively connected to the armature (30).

6. Actuator device according to Claim 5, **characterized in that** the armature (30) is lengthened via a guided rod (36), to the free of end of which one end of the coil spring (40) is attached.

7. Actuator device according to Claim 1, **characterized in that** it has a pivoting lever device (50) designed to be bistable in two parts and movable by means of the actuator, a first pivoting lever (52) carrying the blocking finger (13).

8. Actuator device according to Claim 7, **characterized in that** the actuator (15) is operatively connected to the first pivoting lever (52) carrying the blocking finger (13), the first pivoting lever (52) being articulated with one end on a stationary axis (56), and a second pivoting lever (54) being connected with one end pivotably to the first pivoting lever (52), and the other end of the second pivoting lever (54) having a longitudinal hole (62), and **in that** the pivoting lever device (50) has a compression spring (66), one end of which is supported on the stationary axis (64) passing through the longitudinal hole (62) and the other end of which is supported at the fulcrum (68) between the two pivoting levers (52, 54).

## Revendications

1. Dispositif d'actionneur pour une transmission d'un véhicule automobile comprenant une unité de moteur (1) et un doigt de commande (2) déplacé par l'unité de moteur (1) et connecté par le biais d'une chaîne cinématique (3), et un actionneur (15) avec un doigt de blocage (13) déplacé par l'actionneur, qui peut venir en prise dans une roue (7) connectée à la chaîne cinématique et munie de logements (11) correspondants, de telle sorte que la chaîne cinématique du dispositif d'actionneur soit bloquée, **caractérisé en ce que** l'actionneur (15) peut aussi adopter, en cas de perturbation par coupure de courant, de manière bistable seulement deux positions d'extrémité stables, une position d'extrémité étant une position de repos dans laquelle la chaîne cinématique n'est pas bloquée, et une position active dans laquelle le doigt de blocage (13) vient en prise dans un logement de la roue (7) et bloque ainsi la chaîne cinématique.

2. Dispositif d'actionneur selon la revendication 1, **caractérisé en ce que** l'actionneur (15) comprend un solénoïde (30, 32, 34) dont l'armature (30) porte le doigt de blocage.

3. Dispositif d'actionneur selon la revendication 2, **caractérisé en ce que** le solénoïde est réalisé sous forme de solénoïde bistable.

4. Dispositif d'actionneur selon la revendication 2, **caractérisé en ce qu'**il présente un dispositif de ressort bistable (40) qui vient en prise sur l'armature (30) du solénoïde et définit ainsi deux positions d'extrémité stables, toutes les positions intermédiaires situées entre les positions d'extrémité étant instables.

5. Dispositif d'actionneur selon la revendication 4, **caractérisé en ce que** le dispositif de ressort (40) présente un ressort spirale avec deux extrémités (44, 46) dont une extrémité (44) est fixe et dont l'autre extrémité (46) est en liaison fonctionnelle avec l'armature (30).

6. Dispositif d'actionneur selon la revendication 5, **caractérisé en ce que** l'armature (30) est prolongée par le biais d'une tige guidée (36), à l'extrémité libre de laquelle est montée une extrémité du ressort spirale (40).

7. Dispositif d'actionneur selon la revendication 1, **caractérisé en ce qu'**il présente un dispositif de levier pivotant (50) réalisé en deux parties sous forme bistable, déplacé par l'actionneur, un premier levier pivotant (52) portant le doigt de blocage (13).

8. Dispositif d'actionneur selon la revendication 7, **caractérisé en ce que** l'actionneur (15) est en liaison fonctionnelle avec le premier levier pivotant (52) portant le doigt de blocage (13) et le premier levier pivotant (52) étant articulé par une extrémité à un axe fixe (56) et un deuxième levier pivotant (54) étant connecté par une extrémité de manière pivotante au premier levier pivotant (52) et l'autre extrémité du deuxième levier pivotant (54) présentant un trou oblong (62), et **caractérisé en ce que** le dispositif de levier pivotant (50) présente un ressort de pression (66) dont une extrémité s'appuie sur l'axe fixe (64) venant en prise à travers le trou oblong (62) et dont l'autre extrémité s'appuie sur le centre de pivotement (68) entre les deux leviers pivotants (52, 54).
